(19) Europäisches Patentamt
European Patent Office
Office européen des brevets

(11) Veröffentlichungsnummer: **0 018 327**
**A2**

(12) # EUROPÄISCHE PATENTANMELDUNG

(21) Anmeldenummer: **80810125.7**

(22) Anmeldetag: **14.04.80**

(51) Int. Cl.³: **C 07 F 7/22,** B 01 J 31/18

(30) Priorität: **19.04.79 CH 3688/79**

(43) Veröffentlichungstag der Anmeldung: **29.10.80**
**Patentblatt 80/22**

(84) Benannte Vertragsstaaten: **DE FR GB NL**

(71) Anmelder: **CIBA-GEIGY AG, Patentabteilung Postfach,**
**CH-4002 Basel (CH)**

(72) Erfinder: **Wehner, Wolfgang, Dr., Wetzbach 34,**
**D-6144 Zwingenberg (DE)**
Erfinder: **Köstler, Hans-Günter,**
**Gerhart-Hauptmann-Strasse 11,**
**D-6148 Heppenheim/Bergstrasse (DE)**

(54) **Verfahren zur Herstellung von Methylalkylzinndichlorid und die Verwendung der so hergestellten Verbindungen.**

(57) Verfahren zur Herstellung von der Verbindung der Formel I

$CH_3(R)SnCl_2$ (I)

worin R $C_4$–$C_{20}$ Alkyl bedeutet, dadurch gekennzeichnet, daß man Dimethylzinnchlorid und R–Cl, worin R die zuvor genannte Bedeutung hat, in Gegenwart eines Katalysators der Formel II

$R'(R'')_3—M^{\oplus}X^{\ominus}$ (II)

worin R' gegebenenfalls mit $C_1$–$C_4$ Alkoxy substituiertes $C_1$–$C_{20}$ Alkyl, $C_7$–$C_{20}$ Aralkyl, welches gegebenenfalls am Aryl mit Halogen oder $C_1$–$C_4$ Alkoxy substituiert ist, bedeutet, R'' für gleiche oder verschiedene Reste aus der Gruppe R' oder für gegebenenfalls mit $C_1$–$C_4$ Alkyl, $C_1$–$C_4$ Alkoxy oder Halogen substituiertes Phenyl steht, M ein Kation N, P oder Sb und X ein Anion Chlor, $SnCl_3$, $CH_3$–$SnCl_4$, $(CH_3)_2$—$SnCl_3$, $SnCl_5$ oder $SbCl_4$ bedeutet, umsetzt.

Die Verbindungen der Formel I sind Zwischenprodukte für Stabilisatoren in halogenhaltigen Thermoplasten.

EP 0 018 327 A2

CIBA-GEIGY AG
Basel (Schweiz)

3-12321/=

BEZEICHNUNG GEÄNDERT
siehe Titelseite

Verfahren zur Herstellung von Methylalkylzinndichlorid.

Die Erfindung betrifft ein Verfahren zur Herstellung von Methylalkylzinndichloriden, die insbesondere als Zwischenprodukte zur Herstellung von Organozinn-Stabilisatoren für halogenhaltige Thermoplaste geeignet sind.

Es sind verschiedene Synthesewege für die Herstellung von Dialkylzinndichloriden bekannt. US-PS 3 519 665 beschreibt beispielsweise deren Herstellung via Direktalkylierung, in Gegenwart von Phosphoniumjodid als Katalysator. Um gute Ausbeute zu erhalten, müssen jedoch die Nebenprodukte im Kreislauf in den Reaktionsraum zurückgeführt werden.

Aus der US-PS 4 052 427 ist die Herstellung von Methylalkylzinndichloriden mittels Transalkylierung bekannt. Die Reaktion

$$(CH_3)_2SnCl_2 + R_1\text{-}Cl \xrightarrow{\text{Katalysator}} CH_3(R_1)SnCl_2 + CH_3Cl$$

worin $R_1$ $C_2$-$C_{20}$ Alkyl bedeutet, verläuft nur in Gegenwart des bereits erwähnten Phosphoniumjodid-Katalysators.

Die Verwendung von jodhaltigen Katalysatoren hat den Nachteil, dass es zur Verfärbung des Endproduktes führt, die wiederum ungünstig ist für seine spätere Verwendung als Ausgangsprodukt zur Herstellung von Stabilisator.

Das Ziel war es daher, langkettige Alkylzinnhalogenide jodfrei herzustellen.

US-PS 3 901 824 beschreibt die Herstellung von Dimethylzinndichlorid via Direktalkylierung, d.h. aus Sn und Methylchlorid in Gegenwart von Phosphoniumchlorid als Katalysator. Da die Reaktion in guter Ausbeute zu nahezu farblosem Produkt führt, lag es nahe, auch langkettige Alkylzinnhalogenide auf diese Weise herzustellen. Versuche haben jedoch gezeigt, dass dabei die Verwendung von Phosphoniumchlorid als Katalysator nur zu äusserst schlechten Ergebnissen führt. Daraus war zu folgern, dass Phosphoniumchlorid als Katalysator ungeeignet sei zum Herstellen von langkettigen Alkylzinnhalogeniden, und zwar auch auf dem Wege über eine Transalkylierung.

Es hat sich nun gezeigt, dass überraschenderweise farblose, langkettige Methylalkylzinnhalogenide mit einem zusätzlichen Anteil an Alkylzinntrichloriden in guter Ausbeute durch eine einfache Synthese entstehen, wenn man Phosphoniumchlorid als Transalkylierungskatalysator verwendet.

Gegenstand der vorliegenden Erfindung ist daher ein Verfahren zur Herstellung von Verbindungen der Formel I

$$CH_3(R)SnCl_2 \qquad (I)$$

worin R $C_4$-$C_{20}$ Alkyl bedeutet, das dadurch gekennzeichnet ist, dass man Dimethylzinndichlorid und R-Cl, worin R die zuvor genannte Bedeutung hat, in Gegenwart eines Katalysators der Formel II

$$R'(R'')_3 M^{\oplus} X^{\ominus} \qquad (II)$$

worin R' gegebenenfalls mit $C_1$-$C_4$ Alkoxy substituiertes $C_1$-$C_{20}$ Alkyl oder $C_7$-$C_{20}$ Aralkyl, welches gegebenenfalls am Aryl mit Halogen oder $C_1$-$C_4$ Alkoxy substituiert ist, bedeutet, R" für gleiche oder verschiedene Reste aus der Gruppe R' oder für gegebenenfalls mit $C_1$-$C_4$ Alkyl, $C_1$-$C_4$ Alkoxy oder Halogen substituiertes Phenyl steht, M ein Kation N, P oder Sb und X ein Anion Chlor, $SnCl_3$, $CH_3$-$SnCl_4$, $(CH_3)_2$-$SnCl_3$, $SnCl_5$ oder $SbCl_4$ bedeutet, umsetzt.

R bedeutet $C_4$-$C_{20}$ Alkyl, wie z.B. n-Butyl, t-Butyl, n-Amyl, iso-Amyl, t-Amyl, n-Hexyl, 2-Aethylhexyl, n-Octyl, n-Decyl, n-Dodecyl, 11-Methyldodecyl, n-Tetradecyl, n-Hexadecyl, 16-Methylheptadecyl und 2-Eicosyl. Bevorzugt ist R ein geradkettiger Alkylrest mit 4 bis 12 C-Atomen, wie n-Butyl, n-Decyl und n-Dodecyl, insbesondere n-Dodecyl.

R' bedeutet gegebenenfalls mit $C_1$-$C_4$ Alkoxy substituiertes $C_1$-$C_{20}$ Alkyl, beispielsweise Methyl, Aethyl, n-Propyl, iso-Propyl, n-Butyl, t-Amyl, n-Octyl, n-Dodecyl, 11-Methyldodecyl, n-Tetradecyl, 16-Methylheptadecyl, Nonadecyl, 2-Aethoxyäthyl, 4-Aethoxybutyl. Bevorzugt ist R' ein geradkettiges $C_1$-$C_4$ Alkyl-Rest, wie Methyl, Aethyl, n-Propyl oder n-Butyl, insbesondere n-Butyl.

R' kann auch $C_7$-$C_{20}$ Aralkyl bedeuten, wie z.B. Benzyl oder 1-Phenyläthyl, wobei die Reste am Aryl gegebenenfalls mit Halogen oder mit $C_1$-$C_4$ Alkoxy substituiert sein können, z.B. 2-Methoxybenzyl, 2-Methoxy-phenyläthyl, 3-Chlorbenzyl. Bevorzugt ist Benzyl.

R" kann das gleiche bedeuten wie R' oder Phenyl, das gegebenenfalls mit $C_1$-$C_4$ Alkyl, Halogen oder $C_1$-$C_4$ Alkoxy substituiert sein kann. Zum Beispiel kann R" Phenyl, 3-Methoxyphenyl, Tolyl, Xylyl oder 4-Chlorophenyl sein. Bevorzugt ist R" Phenyl, Benzyl oder n-Butyl. Besonders bevorzugt ist n-Butyl.

M steht für N, P und Sb, vorzugsweise für P.

X bedeutet ein chlorhaltiges Anion, wie z.B. Chlor, $SnCl_3$, $CH_3-SnCl_4$, $(CH_3)_2-SnCl_3$, $SnCl_5$ oder $SbCl_4$. Vorzugsweise ist X $SnCl_5$.

Besonders bevorzugt ist Tributylmethylphosphoniumpentachlorostannat(IV) als Katalysator.

Beispiele für Verbindungen der Formel I:
Methyl-n-butylzinndichlorid
Methyl-n-hexylzinndichlorid
Methyl-n-decylzinndichlorid
Methyl-n-dodecylzinndichlorid
Methyl-iso-tridecylzinndichlorid
Methyl-n-tetradecylzinndichlorid.

Bei dem erfindungsgemässen Verfahren beträgt das Molverhältnis von Dimethylzinndichlorid zu R-Cl im allgemeinen etwa 1:1. Bevorzugt wird mit einem geringen Ueberschuss an R-Cl gearbeitet.

Die Umsetzung kann bei 160 bis 240° C, bevorzugt bei 180 bis 200° C erfolgen.

Das Reaktionsmedium kann auch übliche inerte Lösungsmittel enthalten, wie z.B. aliphatische und aromatische Kohlenwasserstoffe, Aether, Ester, cyclische Carbonate, Sulphoxide oder Sulpholane. Vorzugsweise werden jedoch die Reaktanten, $(CH_3)_2SnCl_2$ oder R-Cl verwendet.

Der Katalysator kann in den Mengen von 5 bis 50 Mol-%, bezogen auf $(CH_3)_2SnCl_2$, eingesetzt werden. Bevorzugt ist 10 bis 30 Mol-%.

Das Ausgangsprodukt Dimethylzinndichlorid und der Oniumchlorid-Katalysator können in bekannter Weise, wie in US-PS 3 901 824

beschrieben, hergestellt werden. Die Verbindungen R-Cl sind bekannt oder nach üblichen Verfahren zugänglich.

Die Verbindungen der Formel I sind wichtige Zwischenprodukte für die Herstellung von Organozinn-Stabilisatoren, die in halogenhaltigen Thermoplasten wie PVC Verwendung finden. Eine solche Herstellung schliesst üblicherweise die Reaktion mit organischen Fettsäuren von 6 bis 18 C-Atomen, mit Alkylthiolen, mit Mercaptoestern oder mit Alkoholen ein, wie z.B. in CA-PS 595 138 beschrieben.

Die Verbindung der Formel I, hergestellt nach dem erfindungsgemässen Verfahren, entsteht im Gemisch mit $R-SnCl_3$ und $CH_3SnCl_2$, worin R $C_4$-$C_{20}$ Alkyl bedeutet.

Das nach dem erfindungsgemässen Verfahren entstandene Reaktionsgemisch kann direkt zur Weiterverarbeitung zu einem Stabilisator eingesetzt werden. Der Anteil an langkettigem Alkylzinntrichlorid, welches nach den herkömmlichen Verfahren nur schwierig zugänglich ist, wirkt im Stabilisator als Synergist.

Das erfindungsgemässe Verfahren führt zu überraschend guten Ausbeuten. Ein grosser Vorteil der verwendeten Oniumchlorid-Katalysatoren ist, dass sie zu keiner Verfärbung der Produkte führen. Abgesehen davon, sind sie auch preiswerter als jodhaltige Katalysatoren.
Die Synthese verläuft auf unkomplizierte Weise. Die hohe Ausbeute wird ohne Zurückführung der Nebenprodukte in den Reaktionsraum erreicht. Ein weiterer Vorteil gegenüber dem Phosphoniumjodid-katalysierten Verfahren ist, dass Alkylzinntrichlorid entsteht, welches in einem direkt aus dem Reaktionsgemisch hergestellten Stabilisator als Synergist wirkt.

Das nachfolgende Beispiel erläutert die Erfindung. Prozente sind Gewichtsprozente.

Beispiel : In einem Dreihalskolben, mit Rührer und Rückflusskühler versehen, werden bei 180° C 0,2 Mol $(CH_3)_2SnCl_2$ und 0,05 Mol Katalysator vorgelegt. Es erfolgt eine langsame Zugabe von 0,4 Mol Laurylchlorid während 4 Stunden unter allmählicher Steigerung der Temperatur auf 200° C. Es wird weitere 2 Stunden bei 200° C gerührt.

Nach Beendigung der Methylchlorid-Abspaltung liegt ein Gemisch vor, dem nach gaschromatographischer Analyse folgende Zusammensetzung zukommt:

| Katalysator | $[CH_3(CH_2)_3]_3\overset{\oplus}{P}-CH_3$ $J^{\ominus}$ (Vergleich) | $[CH_3(CH_2)_3]_3\overset{\oplus}{P}-CH_3$ $SnCl_5^{\ominus}$ |
|---|---|---|
| $(CH_3)_2SnCl_2$-Umsatz in % | 87,1 | 93,7 |
| Sn-Verteilung in % $(CH_3)_2SnCl_2$ | 12,9 | 6,3 |
| $CH_3[CH_3(CH_2)_{11}]-SnCl_2$ | 81,6 | 63,5 |
| $CH_3SnCl_3$ | 5,5 | 12,1 |
| $CH_3(CH_2)_{11}SnCl_3$ | - | 18,1 |

Durch Destillation ist $CH_3[CH_3(CH_2)_{11}]-SnCl_2$ als Hauptkomponente abtrennbar. Smp: 43 bis 45° C.

Patentansprüche

1. Verfahren zur Herstellung von Verbindungen der Formel I

$$CH_3(R)SnCl_2 \qquad (I)$$

worin R $C_4$-$C_{20}$ Alkyl bedeutet, dadurch gekennzeichnet, dass man Dimethylzinndichlorid und R-Cl, worin R die zuvor genannte Bedeutung hat, in Gegenwart eines Katalysators der Formel II

$$R'(R'')_3M^{\oplus}X^{\ominus} \qquad (II)$$

worin R' gegebenenfalls mit $C_1$-$C_4$ Alkoxy substituiertes $C_1$-$C_{20}$ Alkyl, oder $C_7$-$C_{20}$ Aralkyl, welches gegebenenfalls am Aryl mit Halogen oder $C_1$-$C_4$ Alkoxy substituiert ist, bedeutet, R" für gleiche oder verschiedene Reste aus der Gruppe R' oder für gegebenenfalls mit $C_1$-$C_4$ Alkyl, $C_1$-$C_4$ Alkoxy oder Halogen substituiertes Phenyl steht, M ein Kation N, P oder Sb und X ein Anion Chlor, $SnCl_3$, $CH_3$-$SnCl_4$, $(CH_3)_2SnCl_3$, $SnCl_5$ oder $SbCl_4$ bedeutet, umsetzt.

2. Verfahren nach Anspruch 1, zur Herstellung der Verbindung der Formel I im Gemisch mit R-$SnCl_3$ und $CH_3SnCl$, worin R die in Anspruch 1 genannte Bedeutung hat.

3. Verfahren nach Anspruch 1, dadurch gekennzeichnet, dass R ein geradkettiges $C_4$-$C_{12}$ Alkyl bedeutet.

4. Verfahren nach Anspruch 1, dadurch gekennzeichnet, dass R' und R" $C_1$-$C_{20}$ Alkyl bedeuten.

5. Verfahren nach Anspruch 1, dadurch gekennzeichnet, dass R' und R" geradkettiges $C_1$-$C_4$ Alkyl bedeuten.

6. Verfahren nach Anspruch 1, dadurch gekennzeichnet, dass M für P steht.

7. Verfahren nach Anspruch 1, zur Herstellung von Methyl-n-dodecylzinndichlorid.

8. Verfahren nach Anspruch 1, dadurch gekennzeichnet, dass der Katalysator Tributylmethylphosphonium-pentachlorostannat(IV) ist.

9. Verfahren nach Anspruch 1, dadurch gekennzeichnet, dass man bei 160 bis 240° C arbeitet.

10. Verfahren nach Anspruch 1, dadurch gekennzeichnet, dass man die Reaktion in Gegenwart eines inerten Lösungsmittels durchführt.

11. Verfahren nach Anspruch 10, dadurch gekennzeichnet, dass als Lösungsmittel $(CH_3)_2SnCl_2$ oder R-Cl verwendet wird, worin R die in Anspruch 1 gegebene Bedeutung hat.

12. Verfahren nach Anspruch 1, dadurch gekennzeichnet, dass der Katalysator in den Mengen 5 bis 50 Mol-%, bezogen auf das eingesetzte Dimethylzinndichlorid verwendet wird.

13. Verwendung der Verbindungen der Formel I gemäss Anspruch 1, als Zwischenprodukte für die Herstellung von Organozinn-Stabilisatoren in halogenhaltigen Thermoplasten.